# EUROPEAN PATENT APPLICATION

(11) **EP 2 629 238 A1**
(43) Date of publication of application: **21.08.2013**
(21) Application number: 13020018.1
(22) Date of filing: 10.08.2010
(51) Int. Cl.: G06K 9/00, H04L 29/08

(54) **Establishing an ad hoc network using face recognition**

(30) Priority: 21.08.2009 US 545794
(62) Divisional of application: 10743308.8
(71) Applicant: QUALCOMM Incorporated, San Diego, CA 92121-1714 (US)
(72) Inventor: Jacobs, Paul E., San Diego, CA 92121-1714 (US); Julian, David Jonathan, San Diego, CA 92121-1714 (US)
(74) Representative: Carstens, Dirk Wilhelm

(57) **Abstract**

Ad hoc network formation is provided in connection with using face recognition and simple device pairing to build a network. Upon determining the identity of an individual using, for instance, a software recognition program, various protocols may be used to implement the formation of the ad hoc network.

## Description

### BACKGROUND

### Background

A method of identifying faces of those from a group of people in an organization, particularly for social networking, workplace functions, etc. would be highly desirable. While many face recognition algorithms exist, a limiting aspect of most is the amount of time and computing power required to run the algorithm given all of the characteristics for comparison under consideration. For instance, at the recent Beijing Olympics, a face recognition system addressing security concerns was employed which turned out to be a dismal failure due to the intensive computational time needed to run the identification algorithm(s). Nonetheless, face recognition programs can be very useful when properly matched with an application providing an economy of scale for uses better suited to exploit or synergize the face recognition capability benefits. The following accomplishes this task.

### BRIEF DESCRIPTION OF THE DRAWINGS

FIG. 1 illustrates a diagram showing each user and the user's mobile device.

FIG. 2 illustrates a diagram showing exemplary signaling exchanges between communication nodes and steps associated with an exemplary method that supports communicating messages.

FIG. 3 illustrates a diagram of a possible use scenario.

FIG. 4 illustrates a flow chart detailing one possible process flow for an embodiment using the foregoing described methods.

FIG. 5 illustrates a diagram of detailing an e-business card distribution between parties using mobile devices.

FIG. 6 illustrates a flowchart detailing badge distribution for guests according to one aspect of the invention.

FIG. 7 illustrates a flowchart which outlines an approach to allowing employee's access to secured areas such as those through which an electronic door is encountered.

FIG. 8 illustrates a flowchart outlining a use case involving tool sharing.

Applicable reference numbers have been carried forward.

### DETAILED DESCRIPTION

A portable device such as a mobile phone with camera or video capability can be used to capture images of one or more people and make comparisons using predefined characteristics in connection with information stored within a database or by use of broadcast or multicast messages. Preferably, the database encompasses a target group where expectations of encounters with members might be higher than those of a much larger group. For instance, a targeted group might comprise people from the same company within the same city as distinguished from a larger group by orders of magnitude such as the group of all people within a city.

Several approaches to facial identification are contemplated. These include knowledge-based methods which encode facial features according to rules applied based on the typical face; template matching methods which match images to those from a catalog of stored facial images or features; appearance based methods which develop models for comparison based on training images; and feature invariant models which use algorithms to discover facial features even though the view and pose of the subject and/or lighting conditions change.

Defined facial characteristics for members of the targeted group, (e.g., company employees) can be catalogued employing, for instance, one or more the aforementioned facial identification methods. For instance, using a feature invariant approach, a portable device, such as a portable communication device with a still camera or video camera may capture images including facial images. An algorithm either running on the device (e.g., processor in the device) or running remotely, in connection with receipt of those images, makes comparisons and establishes similarities between what's recognized as a captured facial image and cataloged facial features associated with a particular member from the targeted group.

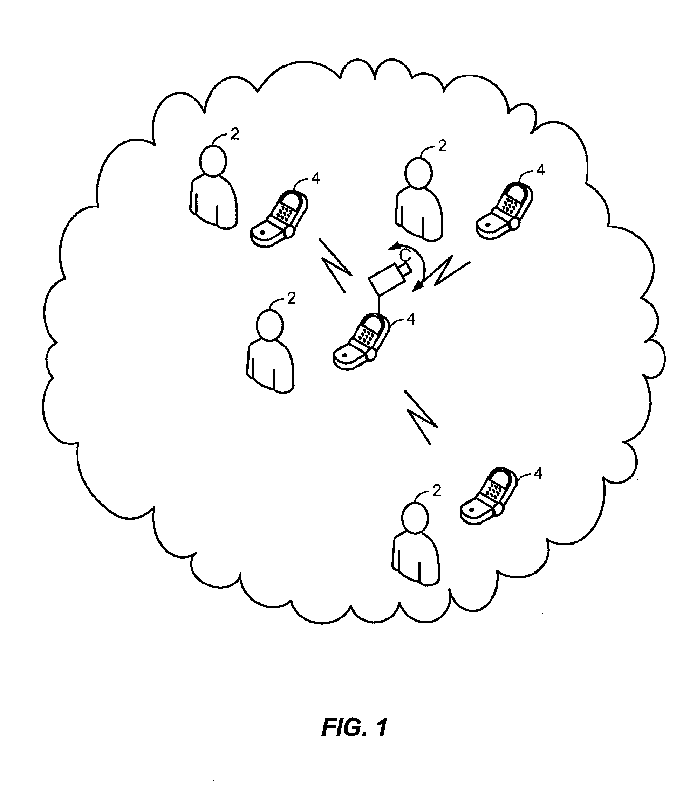

Fig. 1 illustrates a diagram showing each user 2 and the user's associated mobile device 4. In one embodiment of the invention, camera C in mobile device 4 is used to capture and identify a facial image. in connection with the use of facial identification software. Based on this identification, one or more mobile ad hoc networks such as network 6, may be established or extended. These networks, largely determined by coverage area, include combinations of body area networks, personal area networks, wireless local area networks and wide area networks.

A body area network (BAN) generally pertains to network coverage on the order of a few meters. Devices worn on the person may be connected by a BAN. These devices may include a mobile phone, a camera, a microphone, card reader, display, sensor, etc. The BAN may connect with other networks including other BANs and they may be configured automatically and seamlessly to the user.

A personal area network ( PAN) has an operating range on the order of 10 meters and they are generally used to connect a mobile device to fixed devices or other mobiles.

A wireless local area network (WLAN) enables high capacity communications with full connectivity among devices in the WLAN as well as broadcast capability.

The foregoing discussed networks may page and/or connect to other devices such as phones within an established or ad hoc network, providing identifying information using, for instance, the IEEE 802.11 standard for WLANs, FlashLinQ™, and/or the Bluetooth™ specification for shorter range wireless communications. IEEE 802.11 provides a Medium Access Control (MAC) protocol and physical layer for WLANs. Using typically the Distributed Coordination Function (DCF) protocol, the MAC layer specifies for its users, contention-based and contention-free access control on physical layers which may use infrared, frequency hopping spread spectrum and/or direct sequence spread spectrum communications. These would work well for applications for social settings wherein facial identification matches could be broadcast to, for instance, all of the phones within a room or within a particular network of phones in the room.

In one embodiment, in connection with making comparisons of a captured image with those cataloged in a database, the portable device used to capture the image may page or multicast signals to other devices within range, sending a query requesting confirmation of the identification. In connection with an affirmative response, further identifying information can be exchanged allowing further messaging such as SMS messages, video or image messaging, email messaging and other types of wireless communication among devices. This further identifying information can be shared with devices in the network. An added advantage of this embodiment lies in the fact that the identifications and misidentifications can occur silently, seamlessly and automatically. No potentially embarrassing remarks in connection with a misidentification need be made.

Several identification search algorithms are contemplated for use and more than one algorithm may be used to increase the likelihood of an accurate identification. These algorithms could be used in connection with eliminating facial characteristics in traversing a search tree or, alternatively, identifications can be made on an additive basis. Several training images may be used in an effort to properly catalog identifying features.

In yet another embodiment of the invention, facial data characteristics may be maintained on the portable device and exchanged with an inquiring device and/or portable devices in a network. By maintaining only the facial characteristics in a device, anonymity is maintained save for identification information shared within a network. Consequently, if mobile phones can share identification information characteristics, fairly quick identifications can be made comparing those characteristics with particular individuals belonging to a network, e.g. a network for a particular company. Using, for instance, FlashLinQ™ or Bluetooth identifiers in conjunction with other security information, facial recognition identifications can be restricted to those only within a secure group or network. For instance, facial characteristics may be input into a file referred to as a feature tag. Comparing feature tag characteristics with those gleaned from the photograph information taken from the mobile device may serve as a primary basis for making the facial identification.

In another implementation, a camera is used to capture a photograph of a subject entering a room. This photograph my represent a still image or it may be part of a video image. Face recognition software using, for instance, one or more algorithms, may be run on a processor within a mobile device or alternatively, the software may be run remotely. For instance, feature tag data may be processed on the mobile device and transferred to a remote location for identification.

In connection with meeting a threshold level for confirming the identity of a subject, an ad-hoc network may be established among the identified subjects in connection with paging mobile phones and/or other mobile devices in an effort to establish or extend an ad hoc network.
According to one embodiment, simple pairing of devices may occur to quickly establish the ad hoc network. Devices may monitor a discovery channel in connection with receipt of wireless data. The discovery channel is a channel used to find peers, networks or services within a proximity. In one embodiment, devices occasionally (periodically or aperiodically) transmit their peer discovery signal and also listen to peer discovery signals of others in order to detect entities of interest in the proximity. It is contemplated that peer discovery might perhaps occupy roughly 16 ms of every one second, or may be at a lower rate, such as 1msec of every 5 seconds. In one embodiment, in connection with building an ad hoc network, a device can determine the devices around it and then use this information to reduce the search pool of a database against which features are compared. In some embodiments, prior to receiving discovery signals of other devices, a device may broadcast a request for information on the discovery channel. This request for information may include a request for identification information of devices within range of receiving the receiving the request. Further, in still other embodiments, devices may periodically broadcast their feature tag information on the discovery channel, and in some embodiments, thereby forming the database for an image to be compared against. In some embodiments, the feature tag information may be broadcast including name information of the user of a device. In such embodiments the facial identification program is used to make identifications among this limited set, e.g., people within room, in a conference meeting space, etc.
In some embodiments, once a face has been identified, a request for confirmation can be broadcast together with a key, pursuant to building a network. The request may, for instance, identify the requestor and ask for confirmation by way of furnishing the name of the person responding to the request or the device address of the person's device. The response to the request may be transmitted specifically to the requester. Should the facial image and the feature tag information match according to a certain confidence level as determined by the facial identification program, simple pairing can be used thereafter to establish the ad hoc network. In other embodiments, should the name identified through use of the face identification program match that of the responder within a certain confidence level, e.g., the first and last names of the responder match the party identified, simple pairing can be used thereafter to establish the ad hoc network.

Alternatively, security keys may be pre-distributed over a wide area network such as a cellular network which may provision the keys. For instance, identified members of an organization such as employees of a company may already have security keys allocated according to an employee directory. When an identification request is received by a mobile device, the mobile device, for instance, belonging to an employee, responds with the pre-distributed key. The key then provides the access mechanism enabling a respondent to join an ad hoc network. In one aspect, public keys for decoding a particular message, (e.g., a message from members of an organization such as a company, etc.) may be pre-distributed to members within an organization prior to ad hoc network formation. Therefore, only members of the organization will be able to decipher the multicast request. In connection with responding to a network membership request, the key is transmitted to the requester along with data pairing information for the particular responder. In an alternative embodiment, necessary pairing data can be obtained through accessing a secure database, thereby allowing simple pairing among devices associated with a particular organization. The database may hold information pertaining to identifying information for devices held by people within an organization, device type, etc. A mere response in the affirmative to a request to join a network is all that may be needed as a processor running software in the devices may automatically process and handle device pairing. In addition, in some embodiments, pairing data from the secure database may only be exchanged in connection with receipt of permissions received from both.

Alternatively, instead of keys being pre-distributed, they may be supplied upon request from a remote database serving an organization.

In yet another embodiment, instead of a key, a digital certificated may be issued.

Several technologies are contemplated for use for building the ad hoc network. These include the IEEE 802.11 standard for WLANs, FlashLinQ™, Zigbee™ and/or technologies employing the Bluetooth specification. ZigBee™ is for use primarily with a Wireless Sensor Networks (WSN), a network that uses low-power, low data-rate networking technology to wirelessly interconnect multiple devices, including sensors and control nodes, together in an enterprise network and/or over the Internet.

For instance, with conventional use of Bluetooth, about seven active users may be networked together. However, by using the sniff mode or park state, thereby placing mobile wireless devices in an inactive state, this effectively allows more network participants by paging devices in and out of active states or rather, idle states, in order to propagate information throughout the network.

Once an ad hoc network has been established, information may be broadcast from a mobile to several mobiles in the network. One way of implementing such a system is by using a peer-to peer technology such as Qualcomm's FlashLinQ™. In the instance of using FlashLinQ™, a wide area network device such as a mobile phone, equipped with an integrated FlashLinQ™ modem, works transparently across FlashLinQ™ and WAN systems. For instance, FlashLinQ™-initiated application sessions can occur using direct device-to-device (D2D) communication via FlashLinQ™ in addition to indirect communication over the WAN. Communication may alternate between using D2D and WAN without user involvement or knowledge, thus providing a seamless managed service. Thus, it is contemplated that information can be exchanged by broadcasting data from a mobile device to other devices in a network directly or by sending such data to an access point and broadcasting that information over the WAN.

In another embodiment, communications may be broadcast using short message service (SMS).

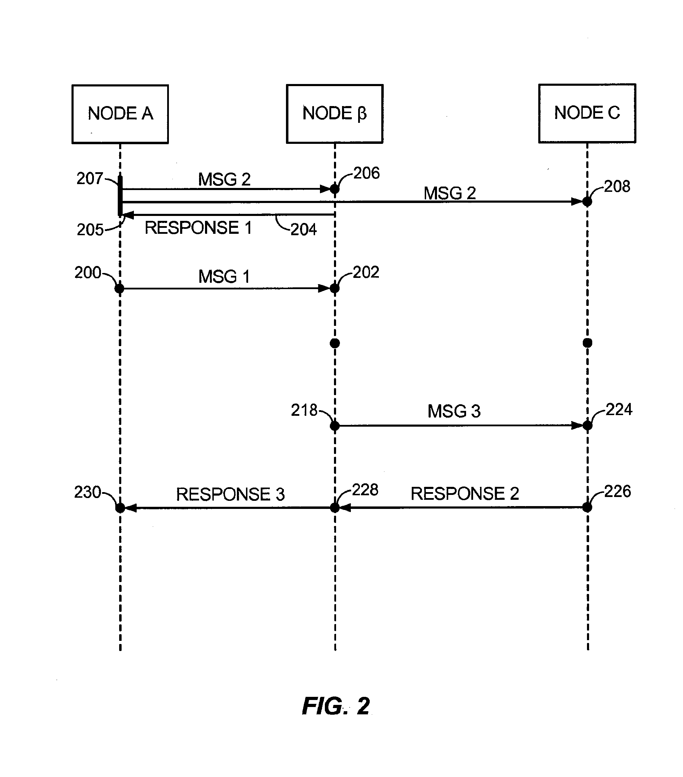

In instances where building an ad hoc network may not permit the opportunity to compare data using, for instance, feature tag information, identification of a party by a single network member may suffice to allow entry of that party to the network. A network built through the use of facial identification may thusly be further extended based on the ability of a network member to recognize potential members for inclusion in a network. FIG. 2 illustrates the steps and associated signaling used in one exemplary embodiment demonstrating the foregoing instance wherein a network member helps build an ad hoc network by identifying transmitted images of parties considered for inclusion in the network. In instances where the identity of subjects cannot be confirmed by database comparisons, an image file containing a facial image may be distributed to network members. This action is taken to cover, for instance, instances where non-employees of a company may be-desired for inclusion in the ad hoc network. For example, clients or customers, identified in a setting such as an exhibition center or conference center, may be considered for ad hoc network membership. However, membership extension may be best carried out in connection with identifications made by other network members. Pursuant to this purpose, as shown in step 200, Node A multicasts message MSG 1, to its existing network members (shown here only as Node β), containing an image file or image feature tags. Message MSG 1 is received by Node β in step 202. The image file or image feature tags holds the image of someone being considered for membership in the ad hoc network. In some embodiments, message MSG 1 is sent to additional nodes in Node A's buddy list. The buddy list identifies members in one or more networks for which Node A is a member or it may hold information on other individuals known by or associated with Node A. Should the party at Node β make an identification of the facial image in the file of MSG 1, it-sends back Response 1 in step 204 with identifying information including a name of the subject. Node A receives Response 1 in step 205. Although Node β, could seek to build the network by extending a membership request to identified parties, the task of network building may be delegated to one or more other parties such as Node A. In response to the identification made by Node β, Node A, as shown in step 207, transmits, e.g., multicasts, message MSG 2, e.g., message, which is received and by communications node β and communications node C, in steps 206 and 208 respectively.

MSG 2 may be a request of Node C, the party identified by Node β, to become part of Node A's network. Further, consider that the user at Node A does not know the user at Node C. In some embodiments, there may be a reasonable probability that in an area such as a conference center or exhibition space, one or more users may know common associates, friends or peers. For example, with reference to FIG. 2, the user at Node β may know the user at Nodes A and the user at Node C. The user at Node β can therefore help facilitate the building of an ad hoc network involving Node A and Node C. Message MSG 1 may, for example, also include a request from Node A to its associates such as Node β that receive message MSG 1 , to second a request for an entity to join the ad hoc network. Thus, Node β which has a relationship with Node A can help Node A extend the network by sending message MSG 3 , in step 218, containing a second request to Node C to join the network. Therefore, although the user at Node A may not know the user at Node C, the user at Node β does and the user at Node β can facilitate extending the network through this method which can be referred to as sponsorship.

Message MSG 3 which is received by node C in step 224 may be subject to further processing to determine the trustworthiness of the information communicated by message MSG 2 , based on the information communicated by message MSG 3. In some embodiments, message MSG 3 includes source verification information, e.g., signature of the sender, message authentication code (MAC), and information for verifying that the information communicated by message MSG 2 has not been altered. It should be appreciated that source verification information such as sender (Node β) signature may help the receiver Node C to verify the authenticity of message MSG 3 and thus ensure that message MSG 3 is coming from a trusted source. In some embodiments, message MSG 3 also includes an association indicator indicating, one or more associations, e.g. long-time friend, work associate, relative, etc.. For example, the rating level indicator may indicate the level of trust accorded to the original requester, e.g. Node A, based upon the relationship with a peer. For example, a co-worker or employee of a common organization might receive a high association level and thereby be more suitably entitled to share certain company information. Alternatively, a good friend may also be accorded a high association level thereby helping to facilitate a tight knit group of friends in a social network. In step 226, following the receipt of MSG 3 from entrusted peer Node β and after determining that the information communicated by the message MSG 2 is trustworthy, Node C sends a response, Response 2 , to Node A through node β which has some relationship with node A. The response being sent from node C is in response to message MSG 2, e.g., accepting the network membership offer received from Node A earlier. The response may be, for example, an indication and/or an acknowledgment that Node C is interested in joining the network offered by Node A and that it would like to interact directly with node A. Node C sends a response message Response 2 to Node β which receives the response message Response 2 in step 228. In step 228 Node β generates a response message Response 3, in some embodiments, by modifying the received Response 2 to include, e.g., some security information corresponding to Node β . The response message Response 3, which includes the information communicated from Node C in response message Response 2, is then communicated to Node A from Node β. Response message Response 3 is received by Node A in step 230 and Node A can trust (have confidence that the response is indeed from Node C) the response message Response 3 since it is sent from a peer at Node β. After receiving the response from Node C, both Nodes A and C may take steps to communicate through the network established or extended (as the case may be). For instance, once a relationship is established between Node A and Node C, then the Nodes A and C may start pairing, exchanging certificates, e.g., spectrum use authorization documents, their IP addresses, public keys, etc.

The foregoing ad hoc networks may be built linking not only individual devices, but also networks such as combinations of BANs, PANs, and WANs. Consequently, a camera attached to a phone held by one person may transmit information to or may even be controlled by another person or device in a different BAN, PAN or WAN.

### EXAMPLE 1

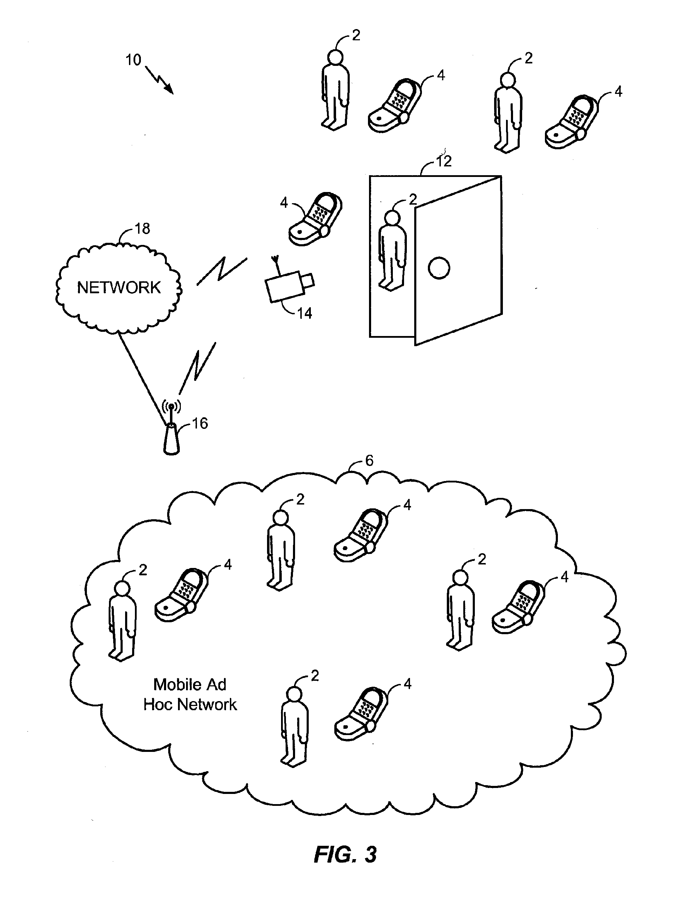

FIG. 3 illustrates a diagram of a possible use scenario of the foregoing. Each user 2 and the user's associated mobile device 4 within setting 10 (e.g., a conference room, a lobby, a convention center, etc.) provide a possible subject for inclusion into ad hoc mobile network 6. In one embodiment, a mobile device 4 may include a camera which may be used to capture the facial image of a person, such as a person entering setting 10 through entry 12. Facial recognition software run on one or more of the mobile devices 4 may be used to carry out identifications in connection with methods described above. In another embodiment, camera 14 is positioned at a location and focused on an area about entry 12. Through use of access point 16, wireless or wired transmissions from camera 14 may be forwarded to network 18 for facial recognition processing. Selected ones of those within setting 10 may be linked in an ad hoc network as determined by entities connected to network 18. For example, appropriate identifications and/or confirmations may be dispatched from network 18 and sent to relevant devices 4 from access point 16. For instance, appropriate pairing data may be dispatched to those employed by a common employer, department, etc. as determined, in part, through using facial identification software. It is contemplated that an initial identification match can be made using software to be followed with additional confirmation of that match. Alternatively, in a meeting room or court room, for instance, voice tags could be used as the data for comparison, to find a speaker's phone and pull identity information for annotation therefore in connection therewith.

### EXAMPLE 2

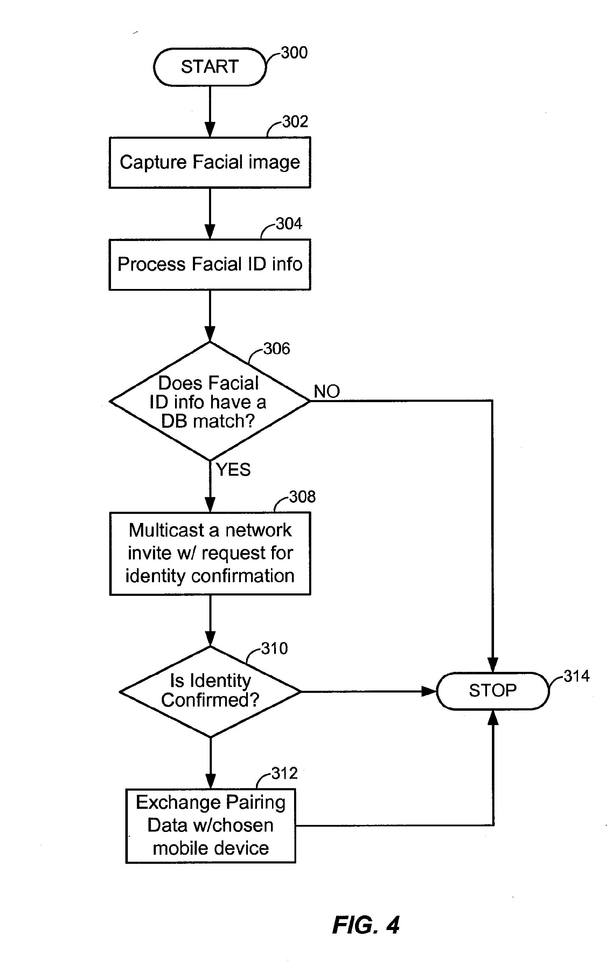

FIG. 4 illustrates a flow chart detailing one possible process flow for an embodiment using the foregoing described methods. Starting from step 300, a facial image is captured, whether via mobile device camera or stand-alone camera fixed in a room environment, etc. That facial information is processed either by the mobile device, remotely or by a combination of the two (remotely and by the mobile device). Facial identity software is used to compare captured facial identity information (at step 304) with that stored in a database. The captured image may be reduced to information input to a feature tag and that feature tag information may be compared with the feature tag information corresponding to entries in the database. Per step 308, should an identity match arise, the database may provide an ID suitable to allow, pursuant to pairing, unicast transmissions between the requestor and the device to which the request is directed. In the case of a misidentification, pairing with a network won't likely occur since there's no guarantee that a misidentified device will be within range of communications. This is especially the case considering Bluetooth or 802.11 communications. In an alternate embodiment, an invite for network membership is multicast by way of sending processed facial ID info to the applicable environment together with a request for confirmation, otherwise the process stops (step 314) until it is reinitialized at step 300. A device with matching information may respond. Confirmation of an identity (step 310) may occur a number of different ways. For instance, a response with a pre-distributed key being transmitted may occur. Alternatively, the confirmation could occur in connection with a digital certificate being dispatched. After confirmation of an identity, paring data is exchanged with the device to be added to the ad hoc network so as to facilitate network communications among all network members.

### EXAMPLE 3

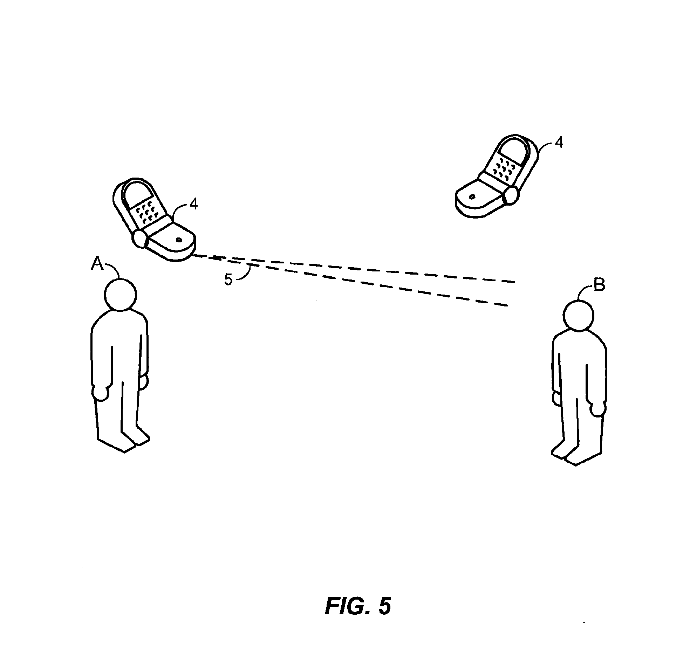

FIG. 5 illustrates a diagram of person A with mobile device 4 near person B with mobile device 4 (e.g., a mobile phone). Person A, being in a social setting or business gathering, wants to get an e-business card from person B, so he/she shoots a picture (denoted by angle 5) of person B with his/her mobile device 4 and person A's mobile device 4 (by itself or in connection with a remote network) finds person B's associated mobile device 4 and pulls the e-business card from it (assuming suitable permissions/authorizations are in place).

Alternatively, still with reference to FIG. 5, person A may have a primary device , e.g. mobile phone, MP3 player, etc. through which networking is sought. By allowing a device to receive information about other devices owned by another person, introductions may be coordinated pursuant to networking. For instance, if person A wanted to share music with person B, then person A could take a picture of person B with a camera device 4 that may include a button for allowing sharing of music. Person A's device 4 (e.g., a smart phone) would then broadcast an image tag of person B. Person B device 4 would match it and respond back to person A's device 4. Person A's device 4 (e.g., phone) would then communicate to person B's device 4 that it's looking for B's headset/handset. B's device 4 would give A's device the headset device address. A's device 4 would then send music to B's headset (or handset as the case may be).

### EXAMPLE 4

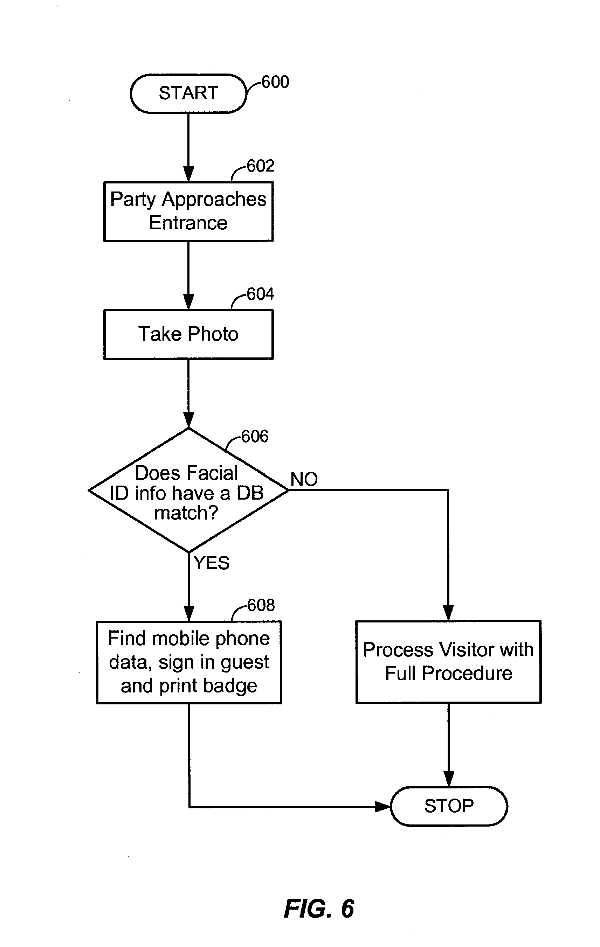

A guest is signing in while visiting a company/ organization, etc. and the guest walks up to the sign-in desk. A camera takes a picture of the guest and this approach is used to find the guest's mobile phone and to pull the guests' identity from a database in order to pre-fill out the sign-in and print an identification badge. These steps are summarized in the flowchart illustrated in Fig. 6. The logic shown follows from Start 600. At step 602 a subject approaches a sign-in station/entrance. During step 604 a photo (or video or other biometric data) is secured/taken from/of the subject. At 606, a decision is made as to whether there's a match between the biometric data observed or taken from the visitor and database information. For instance, biometric data from a subject may be collected in advance in forming a database. In connection with a map, pairing may occur with a mobile device (such as a phone) and identification (ID) info can be secured and used in connection with allocating an ID badge.

### EXAMPLE 5

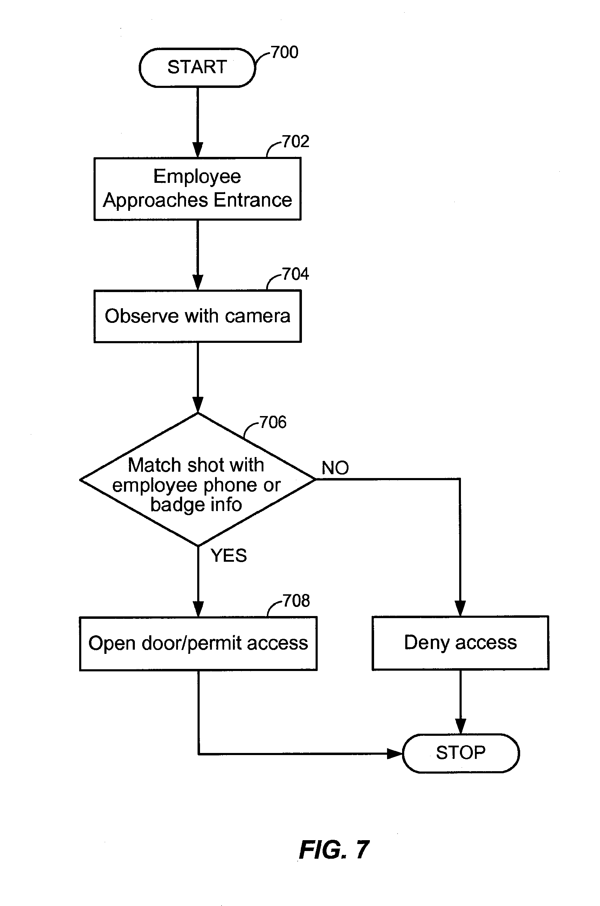

Figure 7 illustrates a flowchart which outlines an approach to allowing employee's access to secured areas such as those through which a electronic door is encountered. Beginning at step 700, as an employee approaches the door (step 702), a camera grabs the employee's picture (step 704), and uses it to find the employees phone or wireless badge, it then conducts a security query exchange with the badge or phone (step 706) to authenticate that the employee is authorized through the door, and opens the door (step 708). For the employee, this takes place seamlessly as he/she approaches, and the back end processing is greatly reduced since the comparisons are based on those in view of the door camera and the short list of biomedical tags on their phones rather than an extensive backend server list of people.

Similarly for a more secure setting a fmger print could be used in lieu of the camera. The fingerprint may be used in conjunction with any other biometric intake to ensure that the employee really wanted to open the door/ access the area.

### EXAMPLE 6

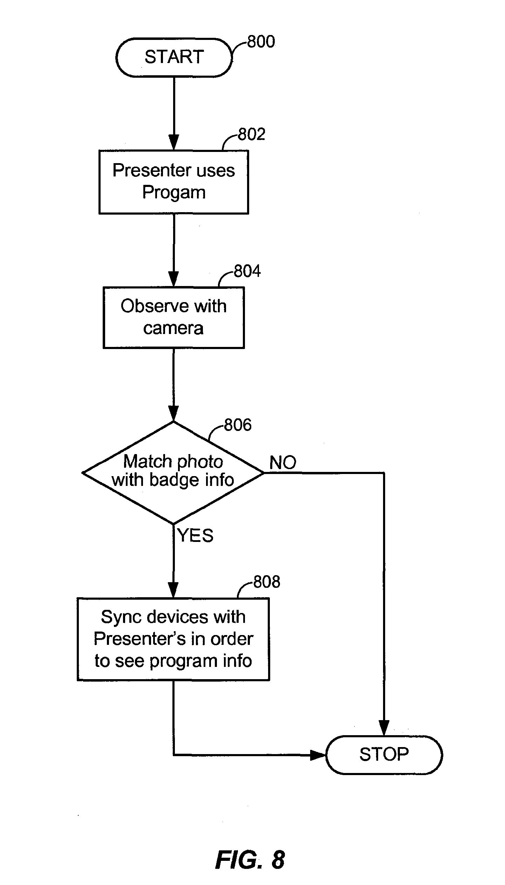

Fig. 8 illustrates a flowchart outlining (beginning at step 800) a use case involving tool sharing. In a meeting where a speaker has presentation material on a computer (step 802), meeting attendees may quickly connect up their computers to the speaker's for sharing documents such as Excel, Word, or Power Point documents, particularly when an overhead isn't available. For instance, the speaker could start talking and everyone would have their computers sync to the speaker's computer. Alternatively, a picture/video (step 804) could be taken of the speaker, or the speaker could swipe his/her fingerprint or provide other types of biometric data to enable those in the meeting room to sample data for comparison with corresponding data stored in a database. Meeting attendees would then identify the speaker's computer based on a database match (step 806) and connect to it (step 808). This could also be used to connect up to an ad hoc network of computers.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Although the foregoing has been directed primarily towards facial recognition, it also is contemplated with use with any sort of biometric identifiers substituted for or inclusive of face recognition. Accordingly, this includes fingerprint information, voiceprint information, heart rate information, gait information, etc.

Once an ad hoc network has been established between or among devices, all manner of sharing of information between or among devices is contemplated whether sharing of music, comments, video, etc.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

### FURTHER SUMMARY OF THE INVENTION

1. A method for establishing an ad hoc network comprising:
   gathering facial identity information;
   multicasting, using a wireless communication device, an invitation for network membership in connection with obtaining a confirmation of a facial identity match; and
   multicasting pairing information in order to network a plurality of wireless communication devices.
2. A method as recited in 1 wherein said facial identification information is gathered using a camera as part of a mobile device.
3. A method as recited in 1 wherein said facial identification information is gathered using a camera in a fixed location.
4. A method as recited in I wherein said confirmation comprises a digital certificate.
5. A method as recited in 1 wherein said confirmation comprises a key.
6. A method as recited in 1 wherein said confirmation comprises a SMS message.
7. A method as recited in 1 wherein said confirmation includes an image.
8. A method as recited in 1 wherein said gathering facial identity information includes classifying said information in a feature tag.
9. A method as recited in 8 which further includes comparing said feature tag information with information stored in a database.
10. A method as recited in 1 wherein said network permits communication occurring by ones selected from device-to-device (D2D) communication, and indirect communication over a wide area network (WAN).
11. A method as recited in 1 wherein said ad hoc network is a peer to peer ( P2P) network.
12. A method as recited in 1 wherein said ad hoc network consists of a plurality of wireless devices, BANs, PANs, WANs or a combination thereof.
13. A method as recited in 5 wherein said confirmation comprises a pre-distributed key.
14. A computer program product for use with a wireless communication device comprising a computer readable medium comprising:
   code for causing a processor to analyze biometric information;
   code for causing said processor to cause a wireless communication device to multicast an invitation for network membership in connection with confirming a biometric identity match; and
   code for causing said processor to cause said communication device to multicast pairing information pursuant to networking a plurality of wireless communication devices.
15. A computer program product as recited in 14 wherein said biometric information comprises facial identity information.
16. A method for establishing an ad hoc network comprising:
   receiving, from a first device, image information and a request for identification of the image: and
   sending, to a second device, a request to join the ad hoc network in connection with transmitting information identifying the image.
17. A method as recited in 16 which further includes receiving a reply, from said second device, to said request to join the ad hoc network.
18. A method as recited in 17 which further includes sending information contained in the reply from the second device to the first device. :
19. A method as recited in 16 wherein said sending a request to join the ad hoc network is a seconding request.
20. A method as recited in 16 wherein said ad hoc network is a peer to peer (P2P) network.
21. A computer program product for use with a wireless communication device, comprising a computer-readable medium comprising:
   code for causing a processor to cause said wireless communication device to receive, from a first device, image information and a request for identification of an image: and
   code for causing a processor to cause said wireless communication device to send, to a second device, a request to join an ad hoc network in connection with transmitting information identifying the image.
22. A method for establishing an ad hoc network comprising:
   gathering facial identity information;
   multicasting, using a wireless device, an invitation to join the network;
   receiving a key in connection with a response, from a second device, to said invitation; and multicasting pairing information to network a plurality of wireless devices.
23. A method as recited in 22 which further includes requesting said key prior to receiving said key.
24. A method as recited in 22 wherein said key is received from a location remote from said first and second devices.
25. A computer program product for use with a wireless communication device, comprising a computer-readable medium comprising:
   code for causing a processor to cause the wireless communication device to gather facial identity information;
      code for causing the processor to cause said wireless communication device to multicast an invitation to join a network;
      code for causing the process to cause said wireless communication device to receive a key in connection with a response, from a second device, to said invitation;
      and
      code for causing the processor to multicast pairing information pursuant to networking a plurality of wireless devices.
26. A method for establishing an ad hoc network comprising:
   gathering facial identity information;
   multicasting, using a wireless device, an invitation to join the network;
   receiving a digital certificate in connection with a response, from a second device to said invitation; and multicasting pairing information to network a plurality of wireless devices.
27. A computer program product for use with a wireless communication device, comprising a computer-readable medium comprising:
   code for causing a processor to cause the wireless communication device to gather facial identity information;
      code for causing the processor to cause said wireless communication device to multicast an invitation to join a network;
      code for causing the processor to cause said wireless communication device to receive a digital certificate in connection with a response, from a second device to said invitation; and
      code for causing the processor to multicast pairing information pursuant to networking a plurality of wireless devices.
28. A method for connecting to a device comprising:
   gathering biometric information;
   wirelessly transmitting the biometric information;
   wirelessly receiving a confirmed match response; and
   communicating with the device based on the confirmed match response.
29. A method for connecting to a device comprising:
   gathering biometric information;
   determining a device identifier based on the biometric information; and
   communicating with the device based on the device identifier.
30. A method of connecting to a device comprising:
   wirelessly receiving biometric information;
   successfully matching the biometric information to a reference; and
   communicating with the device based on the successful match.
31. A method as recited in 28 where the biometric information comprises at least one of facial identification information, fmger print information, voice print information, heart rate information, and gait information.
32. A method as recited in 29 where the biometric information comprises at least one of facial identification information, finger print information, voice print information, heart rate information, and gait information.
33. A method as recited in 30 where the biometric information comprises at least one of facial identification information, finger print information, voice print information, heart rate information, and gait information.
34. A method as recited in 28 where determining the device identifier is based on comparisons of biometric information with information stored in a database.
35. A method as recited in 29 where determining the device identifier is based on comparisons of biometric information with information stored in a database.
36. A method as recited in 28 where the comparisons are based on biometric information received on a broadcast or multicast channel.
37. A method as recited in 28 where the device transmits and/or receives personal identifying information.
38. A method as recited in 29 where the device transmits and/or receives personal identifying information.
39. A method as recited in 30 where the device transmits and/or receives personal identifying information.
40. A method as recited in 28 where the device receives identifying information for a third device.
41. A method as recited in 29 where the device receives identifying information for a third device.
42. A method as recited in 30 where the device receives identifying information for a third device.
43. A method as recited in 28 where the communicating with at the device includes pairing with the device.
44. A method as recited in 29 where the communicating with the device includes pairing with the device.
45. A method as recited in 30 where the communicating with the device includes pairing with the device.
46. A method as recited in 28 where the communicating with the device includes establishing an ad hoc network.
47. A method as recited in 29 where the communicating with the device includes establishing an ad hoc network.
48. A method as recited in 30 where the communicating with the device includes establishing an ad hoc network.
49. A method as recited in 28 wherein the communicating includes sending and/or receiving an e-business card.
50. A method as recited in 28 wherein the communicating includes sharing documents.
51. A method as recited in 28 wherein the communicating includes verifying credentials.
52. A computer program product for use with a wireless communication device, comprising a computer-readable medium comprising:
   code for causing a processor to cause a wireless device to
      gather biometric information;
      code to cause a processor to cause the wireless device to wirelessly transmit biometric information,
      code to cause the wireless device to receive a confirmed match response from a second device; and
      code to cause a processor to cause the wireless device to communicate with the second device based on the confirmed match response.
53. A method for establishing an ad hoc network comprising:
   receiving, from a first device, biometric information,
   identifying the biometric information, and
   sending, to a second device, a request to join the ad hoc network in connection with the identified biometric information.
54. A method as recited in 53 wherein said biometric information comprises image information.
55. A method as recited in 54 wherein said image information includes facial image information.

## Claims

1. A method for connecting to a device comprising:
gathering biometric information;
wirelessly transmitting the biometric information;
wirelessly receiving a confirmed match response; and
communicating with the device based on the confirmed match response.

2. A method for connecting to a device comprising:
gathering biometric information;
determining a device identifier based on the biometric information; and
communicating with the device based on the device identifier.

3. A method of connecting to a device comprising:
wirelessly receiving biometric information;
successfully matching the biometric information to a reference; and
communicating with the device based on the successful match.

4. The method as recited in one of claims 1 to 3, wherein the biometric information comprises at least one of facial identification information, finger print information, voice print information, heart rate information, and gait information.

5. The method as recited in claim 2 wherein determining the device identifier is based on comparisons of biometric information with information stored in a database.

6. The method as recited in claim 5 wherein the comparisons are based on biometric information received on a broadcast or multicast channel.

7. The method as recited in any of claims 1 to 3 wherein the device transmits and/or receives personal identifying information.

8. The method as recited in any of claims 1 to 3wherein the device receives identifying information for a third device.

9. The method as recited in any of claims 1 to 3wherein the communicating with at the device includes pairing with the device.

10. A method as recited in any of claims 1 to 3wherein the communicating with the device includes establishing an ad hoc network.

11. The method as recited in claim 1 wherein the communicating includes sending and/or receiving an e-business card.

12. The method as recited in 1 wherein the communicating includes sharing documents.

13. The method as recited in claim 1 wherein the communicating includes verifying credentials.

14. A computer program product for use with a wireless communication device, comprising a computer-readable medium comprising:
code for causing a processor to cause a wireless device to carry out the steps of any of claims 1 to 13.

15. A processor configured to carry out the steps of any of claims 1 to 13.
